# DEMANDE DE BREVET EUROPEEN

(11) **EP 1 683 880 A2**
(43) Date de publication de la demande: **26.07.2006**
(21) Numéro de dépôt: 06100665.6
(22) Date de dépôt: 20.01.2006
(51) Int. Cl.: C22C 1/10, C01B 13/32, H01C 7/108, C22C 29/12, C22F 1/00

(54) **Procede de preparation de ceramiques semi-conductrices constituees d'oxydes de metaux, notamment d'oxyde d'etain en particulier pour les varistances**

(30) Priorité: 24.01.2005 FR 0550203
(71) Demandeur: AREVA T&D SA, 92084 Paris La Défense Cedex (FR)
(72) Inventeur: Hassanzadeh, Mehrdad, 34830, CLAPIERS (FR); Machado-Bailly, Céline, 41000, BLOIS (FR); Metz, Renaud, 69100, VILLEURBANNE (FR); Puyane, Ramon, 34000, MONTPELLIER (FR)
(74) Mandataire: Poulin, Gérard

(57) **Abrégé**

Procédé de préparation d'une céramique semi-conductrice à base d'oxyde d'étain SnO₂ dopé, par un procédé de type « ODAP » (Oxydation Directe d'un Alliage Précurseur) appliqué à un alliage d'étain et de métaux dopants ; ou par un procédé de type « ODAP » appliqué à l'étain, les métaux dopants étant ajoutés sous la forme d'oxydes dans la poudre soumise au frittage.

## Description

### DOMAINE TECHNIQUE

L'invention a trait à un procédé de préparation de céramiques semi-conductrices constituées d'oxydes de métaux, plus précisément de céramiques semi-conductrices constituées d'un ou de plusieurs oxydes de métaux de base tel que l'oxyde d'étain SnO₂ et d'un ou plusieurs oxydes de métaux dopants.

De telles céramiques semi-conductrices, qu'elles soient massives ou bien sous la forme de couches minces, sont utilisées en particulier pour fabriquer des résistances non linéaires en fonction de la tension, et notamment des varistances ou varistors qui sont utilisés par exemple dans les parafoudres à basse, moyenne et haute tension ou des éléments limiteurs de tension associés par exemple à un appareillage électrique ou électronique.

Le domaine technique de l'invention peut ainsi être défini de manière très générale comme celui des céramiques à base d'oxydes de métaux et de leur préparation, et plus particulièrement comme celui des céramiques présentant une résistance non linéaire en fonction de la tension telles que les varistances.

Des résistances non linéaires en fonction de la tension, telles que des varistances, à base de carbure de silicium, des redresseurs au sélénium et des diodes à jonction p-n en silicium ou en germanium ont été largement utilisés pour la stabilisation de tension de circuits électriques ou la suppression de surtensions normalement élevées, induites dans des circuits électriques.

Les caractéristiques électriques d'une telle résistance non linéaire sont notamment :
- le coefficient de non-linéarité α ; plus α est élevé plus le matériau est performant,
- le champ électrique admissible maximum avant disruption Eₛ (en V/mm) ; plus il est élevé plus le matériau est performant. Ce champ Eₛ correspond à une tension avant disruption Vₛ.

A l'heure actuelle, l'essentiel des résistances est constitué par des masses frittés d'oxyde de zinc ZnO comprenant éventuellement un ou plusieurs additifs ou dopants choisis par exemple parmi les oxydes de métaux.

Ainsi, les documents FR-A-2 174 174, FR-A-2 174 175, FR-A-2 174 176, et FR-A-2 194 026 décrivent-ils des varistances formées par une masse frittée constituée essentiellement de ZnO avec comme additifs du Bi₂O₃, du Sb₂O₃ et du Co₃O₄.

Il a cependant été suggéré en 1973 puis en 1974 de mettre en oeuvre l'oxyde d'étain SnO₂ dans la fabrication de varistances tout d'abord comme dopant puis comme oxyde principal constituant la céramique.

Le document JP-A-49 105196 (1974) décrit une amélioration des propriétés électriques de varistances en ZnO par dopage d'un mélange de ZnO, NiO₂, BaO, TiO₂ par 1% molaire de SnO₂, ce mélange est ensuite compacté et fritté à 1350°C dans l'air.

Les documents JP-A-48 099695 (1973) et JP-A-49 041897 (1974) proposent des formulations qui peuvent être exprimées par exemple par : Bi₂O₃ 7 parts ; (ZnO)_{0,87}(SnO₂)_{0,12}(YF₃)_{0,01} 100 parts et qui permettent d'atteindre des caractéristiques électriques de varistances très variées, simplement en modifiant la teneur en Bi₂O₃.

Ainsi, des valeurs du coefficient de non-linéarité α de 10 à 51,3 et des tensions Vₛ de 235 à 889 V sont-elles obtenues.

Les documents JP-A-49 108590 (1974) et JP-A-49 047898 (1974) proposent pour la première fois des compositions pour varistances majoritairement à base de SnO₂ au lieu de ZnO, bien que ce dernier oxyde soit toutefois toujours présent en quantités minoritaires. Ces compositions contiennent SnO₂ (jusqu'à 70% molaire), ZnO et Sb₂O₃ dopés par Bi₂O₃, V₂O₅, Nb₂O₅, Cr₂O₃ ou Mn₂O₃.

Ces compositions permettent d'obtenir des coefficients de non-linéarité élevés, la valeur maximale indiquée de ce dernier étant de 30.

Plus tard, des compositions de varistances à base de SnO₂, cette fois totalement exempte de ZnO, sont décrites dans les documents JP-A-49 129192 (1974) et JP-A-49 129193 (1974). Ces compositions sont définies de manière générale par les compositions en % molaire suivante : 40 à 99,85 de SnO₂, 0,05 à 30 de Sb₂O₃, et 0, 1 à 50% en mole de CoO.

Les céramiques préparées à partir d'un mélange constitué de 99,9% en mole de SnO₂, 0,05% en mole de Sb₂O₃ et 0,05% en mole de Bi₂O₃ ou d'un mélange constitué de 99,85% en mole de SnO₂, 0,05% en mole de Sb₂O₃ et 0,1% en mole de CoO, compactées et frittés, ont des propriétés électriques de varistances relativement médiocres avec des valeurs de α et Vₛ respectivement inférieures à 10 et 25 V.

On peut cependant considérer que les varistances à base de SnO₂ ne se développent réellement que depuis 1995 avec les travaux mentionnés dans les documents de S.A. PIANARO, P.R. BUENO, E. LONGO et J.A. VARELA "A new SnO₂-based varistor system" qui décrit notamment une composition de varistance comprenant en % molaires : 98,9% de SnO₂, 1% de CoO, 0,05% de Nb₂O₅ et 0,05% de Cr₂O₃.

Cette composition présente des propriétés électriques intéressantes, notamment un coefficient de non-linéarité α de 41 et un champ électrique maximum avant disruption Eₛ de 400 V/mm, qui sont associés à des structures monophasées dont les joints de grain sont apparemment exempts de phases précipitées.

Le document BR-A-96 00174-7 décrit des compositions d'oxydes métalliques pour varistances constituées essentiellement d'oxyde d'étain (SnO₂) dopé par divers oxydes métalliques tels que l'oxyde de cobalt, et l'oxyde de niobium.

Une composition typique comprend de 97,5 à 99,45% de dioxyde d'étain (SnO₂), de 0,5 à 2,0% d'oxyde de cobalt (CoO) et de 0,05 à 0,3% d'oxyde de niobium (Nb₂O₅) . Ces compositions sont ensuite soumises à un frittage à une température de 1300 à 1350°C pour donner une céramique.

En ce qui concerne leur procédé de préparation, les matériaux céramiques semi-conducteurs pour les varistances ou pastilles céramiques semi-conductrices utilisées pour la protection contre les surtensions sont généralement préparées à partir des oxydes qui les constituent, sous forme pulvérulente.

Ainsi, les matériaux céramiques semi-conducteurs les plus largement utilisés actuellement, qui sont à base de ZnO, sont-ils préparés à partir d'oxydes pulvérulents constitués de l'oxyde majoritaire qui est ZnO et des oxydes dopants tels que les oxydes de nickel, chrome, manganèse, magnésium, bismuth, antimoine, silicium, cobalt, etc.

De manière générale, les procédés chimiques classiques de préparation des matériaux céramiques consistent donc à peser les oxydes constitutifs, à les mélanger et à les broyer, puis à constituer un mélange en milieu aqueux pour obtenir une barbotine.

Cette barbotine est atomisée et séchée (technique dite de "spray drying") pour former des agglomérats de quelques centaines de microns qui sont ensuite mis en forme par pressage puis frittés à haute température.

Des électrodes métalliques sont enfin déposées, et l'élément est revêtu, sur ses autres surfaces, d'un matériau assurant l'isolation électrique ainsi que d'une protection physico-chimique et mécanique.

Mais ce type de procédé est complexe à mettre en oeuvre et nécessite d'importantes installations de broyage et de chauffage. De plus, il est difficile d'obtenir une bonne homogénéité chimique, car le mélange intime des éléments broyés, au mieux à une taille micrométrique, ne peut jamais être parfait.

C'est afin de remédier aux inconvénients des procédés traditionnels de préparation de céramiques notamment de céramiques semi-conductrices pour varistances, décrits plus haut, et en particulier afin d'obtenir une poudre homogène au niveau moléculaire d'oxydes de métaux alliés, qu'a été proposé le procédé dénommé "ODAP" ou Oxydation Directe d'un Alliage Précurseur.

Le procédé ODAP est décrit dans le document FR-A-2 674 157 et avec certaines variations par rapport au document FR-A-2 674 157, dans le document EP-A1-0 580 912, ainsi que dans le document US-A-5,322,642.

Dans le procédé ODAP, les éléments de base ou matières premières pour l'obtention de la poudre destinée à donner la céramique semi-conductrice ne sont plus des oxydes de métaux mais des alliages ou mélanges de métaux qui sont seulement ensuite oxydés soit en phase solide, soit en phase liquide, soit en phase vapeur.

Le procédé ODAP, décrit par exemple, dans le document FR-A-2 674 157, comprend les étapes successives suivantes :
- placer les différents métaux choisis dans un creuset ;
- provoquer la fusion desdits métaux sous atmosphère réductrice en assurant un brassage du liquide en vue de l'homogénéiser ;
- couler l'alliage liquide dans une lingotière dans ladite atmosphère réductrice ;
- laisser refroidir le lingot obtenu ;
- réduire le lingot en une poudre de granulométrie déterminée dont chacune des particules est homogène ;
- oxyder lesdites particules.

Le lingot obtenu peut être réduit en poudre par broyage ou en copeaux par usinage de telle sorte que le lingot, la poudre ou les copeaux peuvent être abandonnés sous atmosphère appropriée en vue de leur oxydation.

On peut aussi fondre le lingot en un alliage liquide qui est pulvérisé en vue d'obtenir de fins éléments ou grains solides de composition homogène qui sont ensuite oxydés.

Une fois la poudre obtenue, elle est compactée sous forme de pastilles par pressage à froid, suivi d'un frittage à haute température.

Selon la revendication 10 de ce document, le produit obtenu par le procédé est constitué par un alliage d'oxyde de zinc et de produits dopants constitués par des oxydes d'au moins certains des métaux suivants : Ni, Cr, Mg, Mn, Bi, Sb, Si et Co (à la page 5, ligne 32, c'est le cuivre qui est cité) ; l'étain n'est pas mentionné.

Dans le document EP-A1-0 580 912 est décrit plus largement un procédé du type « ODAP » de fabrication d'une poudre homogène d'oxydes de métaux à partir d'alliages de métaux dans lequel on réalise les étapes successives suivantes :
- placer les différents métaux prévus pour constituer l'alliage dans un creuset ;
- provoquer la fusion desdits métaux sous atmosphère neutre ou réductrice en assurant un brassage du liquide en vue de l'homogénéisation ;
- récupérer l'alliage liquide ;
- obtenir, à partir de l'alliage, une poudre de granulométrie déterminé dont chacune des particules est homogène ;
- oxyder lesdites particules.

Pour préparer une céramique par exemple semi-conductrice à base d'oxydes de métaux, on compacte la poudre d'oxydes obtenue par exemple sous la forme d'une pastille et on fritte le produit compacté à une température supérieure ou égale à 800°C.

Ce procédé s'applique en particulier à la fabrication de semi-conducteurs à base d'oxyde de zinc dopés par des oxydes de Ni, Cr, Mg, Mn, Bi, Sb, Co (ou Cu), de nouveau, l'étain n'est pas cité.

On peut obtenir la poudre de granulométrie déterminée par pulvérisation directe de l'alliage liquide récupéré ou bien par coulée de l'alliage liquide dans une lingotière dans une atmosphère neutre ou réductrice suivi d'une fusion du lingot en un alliage liquide qui est pulvérisé en vue d'obtenir de fins éléments ou grains solides de composition homogène.

Le procédé dit "ODAP", décrit par exemple dans le document FR-A-2 674 157 et dans le document EP-A1-0 580 912 permet, sans avoir recours à une ou plusieurs étapes de broyage et de mélange, souvent sources de pollution, d'obtenir un mélange de poudre d'oxydes parfaitement homogène qui ne peut jamais être obtenu par les procédés traditionnels mettant en oeuvre des installations importantes de broyage et de chauffage. La poudre parfaitement homogène obtenue présente une homogénéité à un niveau moléculaire qui n'avait jamais été atteinte jusqu'alors.

Cependant, le procédé dit "ODAP" n'apporte une réponse au problème d'homogénéité des poudres que dans le cadre de la préparation de poudres d'oxydes, puis de céramiques semi-conductrices, spécifiquement à base d'oxyde de zinc (ZnO) et non dans le cas de céramiques à base d'autres oxydes, en particulier de céramiques à base d'oxyde d'étain (SnO₂).

Cela ressort clairement des deux documents mentionnés ci-dessus où la seule céramique citée est précisément une céramique à base d'oxyde de zinc dopé par des oxydes parmi lesquels l'oxyde d'étain n'est pas cité.

Il existe donc, au regard de ce qui précède, un besoin pour un procédé, dérivé du procédé "ODAP", permettant d'obtenir des poudres d'oxydes, puis des céramiques, parfaitement homogènes au niveau submicroscopique voire moléculaire - c'est-à-dire avec des ségrégations, les plus limitées possibles - qui ne soit pas limité aux poudres et céramiques à base d'oxyde de zinc et qui s'applique notamment aux poudres et céramiques à base d'oxyde d'étain (SnO₂).

Il existe en outre un besoin pour un procédé dérivé du procédé "ODAP" et qui permette d'obtenir des céramiques semi-conductrices à base d'oxydes présentant des paramètres électriques notamment des paramètres α et Eₛ supérieurs à ceux obtenus avec le ZnO.

Il existe, en outre, enfin un besoin pour des céramiques à base d'oxydes présentant une densité accrue et par voie de conséquence, des propriétés mécaniques et thermiques améliorées en particulier en ce qui concerne leur tenue mécanique et leur capacité de dissipation thermique.

Le but de la présente invention est de fournir un procédé de préparation de céramiques à base d'oxydes de métaux qui réponde entre autres aux besoins énumérés ci-dessus.

Le but de la présente invention est en outre de fournir un procédé de préparation de céramiques à base d'oxydes de métaux qui ne présente pas les inconvénients, limitations, défauts et désavantages des procédés de l'art antérieur, et notamment du procédé dit "ODAP" et qui résolve les problèmes des procédés de l'art antérieur.

Ces buts, et d'autres encore, sont atteints, conformément à un premier mode de réalisation de l'invention, par un procédé de préparation d'une céramique comprenant, de préférence constituée par, un oxyde de métal de base et au moins un oxyde de métal dopant, dans lequel on réalise les étapes successives suivantes :
- on place dans un creuset, de l'étain métal (Sn) et ; un ou plusieurs (autres) métaux dopants et/ou un ou plusieurs sels de ces (autres) métaux dopants ;
- on provoque la fusion de l'étain et desdits métaux et/ou sels de métaux dopants placés dans le creuset sous atmosphère neutre ou réductrice, tout en assurant un brassage de l'étain et des métaux dopants et/ou sels de métaux dopants en fusion pour obtenir un mélange ou alliage de métaux liquide, homogène ;
- on prépare à partir dudit mélange ou alliage de métaux, liquide, homogène, une poudre d'alliage de métaux de granulométrie déterminée, directement ou après une opération éventuelle de classification granulométrique par exemple de tamisage, dont chacune des particules est homogène ;
- on oxyde totalement ou partiellement la totalité desdites particules de la poudre d'alliage de métaux de granulométrie déterminée ou une coupe granulométrique déterminée de celle-ci pour obtenir une poudre homogène d'oxydes des métaux, totalement ou partiellement oxydée, en évitant la coalescence des particules ;
- on met en forme la poudre homogène d'oxydes totalement ou partiellement oxydée ;
- on fritte la poudre mise en forme.

Dans cette première forme de réalisation, le procédé selon l'invention peut être défini comme un procédé de type "ODAP" appliqué à l'étain et plus précisément à un alliage d'étain et de métaux dopants et qui est mis en oeuvre afin de préparer des céramiques d'oxyde d'étain dopé.

Le procédé selon l'invention présente donc tous les avantages du procédé ODAP déjà mentionnés plus haut.

On a indiqué plus haut qu'il s'était avéré que le procédé "ODAP" ne permettait de préparer des poudres et des céramiques à base d'oxyde dont les grains sont chimiquement homogènes à l'échelle submicroscopique, voire moléculaire, que dans le cas spécifique des poudres et céramiques à base d'oxyde de zinc (ZnO).

Le procédé selon l'invention, dans ce premier mode de réalisation, n'est pas décrit dans les documents de l'art antérieur où la préparation de céramiques à base de SnO₂ par le procédé ODAP n'est pas mentionnée. A fortiori, la préparation de céramiques à base de SnO₂ comprenant des oxydes dopants, de préférence des oxydes dopants spécifiques dans des proportions spécifiques n'est pas non plus décrite.

Rien ne pouvait laisser prévoir dans l'art antérieur que ce procédé ODAP pouvait être mis en oeuvre avec succès également pour préparer des poudres puis des céramiques à base d'oxyde d'étain (SnO₂).

En effet, les enseignements que l'on peut déduire de la mise en oeuvre du procédé ODAP avec succès à l'oxyde de zinc (ZnO) ne peuvent en aucun cas être appliqués au dioxyde d'étain (SnO₂) car des différences très importantes de comportement existent entre ces oxydes ce qui rend en fait totalement imprévisible et aléatoire le passage d'un oxyde à l'autre ; l'oxyde de zinc présente par exemple un rapport métal/oxygène de 1 alors que pour l'étain ce rapport est égal à 2.

Le succès du procédé "ODAP" prouvé seulement avec l'oxyde de zinc, ne signifiait en rien que ce procédé pourrait être appliqué à l'oxyde d'étain.

En outre, grâce à la mise en oeuvre d'oxyde d'étain SnO₂, les varistances obtenues présentent des caractéristiques électriques meilleures que les varistances de l'art antérieur, notamment obtenues par le procédé, « ODAP », par exemple des propriétés α et Eₛ supérieures à celles obtenues avec les varistances à base d'oxyde de zinc.

Les caractéristiques électriques des varistances préparées par le procédé selon l'invention selon ce premier mode de réalisation sont également meilleures que celles des varistances à base de dioxyde d'étain des documents JP-A-49 108590, JP-A-49 047898, JP-A-49 129192, JP-A-49 129193, JP-A-05 129106 et JP-A-05 129167 dont les valeurs de α sont faibles, et toujours inférieures à 30.

En résumé, on peut exprimer que la présente invention ne porte ni sur le procédé de préparation d'un alliage, ni sur l'atomisation de celui-ci. L'invention peut être définie de manière générale comme étant l'application du procédé « ODAP » au SnO₂. L'histoire physico-chimique d'une poudre est déterminante en chimie du solide. Aussi, les résultats obtenus avec le procédé de l'invention étaient-ils imprévisibles et absolument incertains car l'homme du métier sait que la chimie de l'étain est bien différente de celle du zinc.

Dans le cas où l'oxydation des particules de la poudre d'alliage de métaux n'est qu'une oxydation partielle, cette caractéristique d'oxydation partielle des métaux ou du métal Sn (voir plus bas en ce qui concerne le 2ème mode de réalisation) différencie aussi de manière fondamentale le procédé selon l'invention des procédés de préparation de céramiques semi-conductrices de l'art antérieur et en particulier des procédés de type « ODAP » tels que ceux décrits par exemple dans les documents FR-A-2 674 157 et EP-A-0 580 912, dans lesquels on procède à une oxydation totale.

Autrement dit, dans le procédé selon l'invention, la poudre à compacter est, lorsqu'on procède à une oxydation partielle, un composite constitué de métal (métaux) et d'oxyde(s) métallique(s). Fondamentalement, dans le procédé selon l'invention, et lorsqu'on procède à une oxydation partielle, les poudres compactées sont des mélanges de métal (métaux) et d'oxydes métalliques obtenus par oxydation partielle des poudres métalliques.

De ce fait, la céramique crue (avant frittage et après mise en forme) contient de l'étain métallique et d'autres métaux ce qui n'est jamais le cas dans l'art antérieur, et en ce qui n'est en aucun cas suggéré par l'art antérieur.

On peut dire que l'on soumet dans ce cas au frittage un composite métal-céramique.

Cette oxydation partielle et non totale est une caractéristique préférée de ce premier mode de réalisation du procédé selon l'invention mais aussi du second mode de réalisation (voir plus loin). Il est certes incidemment mentionné dans le document EP-A1-0 580 912 que la poudre d'alliage peut être partiellement oxydée, mais avant le compactage et le frittage cette poudre est oxydée totalement, de sorte que la céramique avant frittage ne contient en aucun cas du métal.

De manière surprenante, il s'est avéré qu'en ne réalisant qu'une oxydation partielle de la poudre d'alliage (ou de métal), la présence de métal, par exemple d'étain métallique au sein de la céramique crue permet d'augmenter la densification de la céramique après frittage. Ceci est expérimentalement bien observé à partir de particules métalliques de taille initiale de l'ordre de 20 à 40 microns de diamètre car les densifications sont relativement faibles. On passe ainsi d'environ 75% à environ 85%.

Les caractéristiques électriques des varistances obtenues (Eₛ et α) lorsqu'on a recours à une oxydation partielle sont également excellentes, par exemple meilleures que celles des documents japonais cités plus haut.

Lorsque l'oxydation partielle donne une poudre avec 50% à 99,9% d'oxyde les effets ci-dessus sont particulièrement marqués.

Un pourcentage de 64% d'oxyde en particulier pour l'étain donne les meilleurs résultats pour la densification et les propriétés électriques.

Le ou les oxydes de métaux dopants peuvent être choisis parmi les oxydes de cobalt, chrome, manganèse, niobium, tantale, métaux de transition tels que le Zn, et métaux de la famille des lanthanides.

En conséquence, le ou les autres métaux dopants placés dans le creuset peuvent être de même choisis parmi les métaux dopants précités, et les sels de métaux placés dans le creuset peuvent être de même choisis parmi les sels des métaux précités.

De préférence, le ou les oxydes de métaux dopants sont choisis parmi les oxydes de cobalt, manganèse, niobium et tantale.

De préférence encore, la céramique contient en tant qu'oxydes de métal dopants simultanément, à la fois, de l'oxyde de cobalt, de l'oxyde de manganèse, de l'oxyde de niobium et de l'oxyde de tantale.

La proportion massique de l'étain et du ou des autres métaux dopants et/ou sels de métaux dopants placés dans le creuset est de préférence telle qu'elle permette d'obtenir une céramique comprenant une proportion d'oxyde d'étain supérieure ou égale à 90% en masse, de préférence supérieure ou égale à 95% en masse, de préférence encore supérieure ou égale à 99% en masse, mieux, supérieure ou égale à 99,995% en masse.

En d'autres termes, la proportion massique du ou des autres métaux dopants et/ou sels de métaux dopants placés dans le creuset est telle qu'elle permette d'obtenir une céramique comprenant, en complément à 100% en masse d'oxyde d'étain, moins de 10% en masse, de préférence moins de 5% en masse, ce préférence encore moins de 1% et mieux moins de 0,005% en masse d'oxydes de métaux dopants.

Ce pourcentage de SnO₂ dans la céramique finale étant respecté, la proportion du ou des autres métaux dopants et/ou sels de métaux dopants dans le creuset est telle qu'elle permette de préférence d'obtenir une céramique comprenant en complément à 100% en masse d'oxyde d'étain un ou plusieurs parmi les oxydes suivants dans les proportions en masse suivantes :
- 0,1 à 3% d'oxyde de cobalt,
- 0,01 à 3% d'oxyde de chrome,
- 0,01 à 3% d'oxyde de manganèse,
- 0,01 à 0,5% d'oxyde de niobium,
- 0,01% à 0,5% d'oxyde de tantale,
- 0,01 à 0,5% d'un ou plusieurs oxydes de métal de transition,
- 0,01 à 0,5% d'un ou plusieurs oxydes de métal de la famille des lanthanides tel que l'oxyde de lanthane.

En effet, les inventeurs ont mis en évidence que le procédé ODAP était mis en oeuvre avec des résultats encore meilleurs pour préparer des céramiques à base d'oxyde d'étain, si celle-ci recevait de préférence l'addition d'oxydes de dopants spécifiques, ces oxydes étant de préférence encore dans les proportions spécifiques citées plus haut.

En d'autres termes, l'adaptation inattendue du procédé "ODAP" aux céramiques à base de SnO₂ est réalisée de manière optimale si l'on ajoute de préférence à celles-ci des dopants spécifiques.

Cette optimisation est encore meilleure si ces dopants spécifiques sont ajoutés dans des proportions spécifiques ce qui constitue ainsi une double sélection.

Le fait que le procédé "ODAP" puisse être appliqué au SnO₂ avec des résultats encore améliorés à la condition que, de préférence, l'on sélectionne de tels dopants, et le fait que cette amélioration soit encore plus falgrante dans de telles plages spécifiques de teneurs ne sont en aucune façon mentionnés dans l'art antérieur.

L'addition de ces dopants spécifiques, de préférence dans ces proportions spécifiques, améliore encore les propriétés électriques, qui sont déjà améliorées de manière inhérente par la mise en oeuvre de SnO₂ au lieu de ZnO, ainsi les autres propriétés telles que la densité

Des oxydes de dopants particulièrement préférés sont choisis parmi les oxydes de cobalt, de manganèse, de niobium et de tantale tels que le Co₃O₄, le MnO₂, le Nb₂O₅ et le Ta₂O₅, de préférence dans les proportions mentionnées ci-dessus.

Une céramique préférée comportera l'addition de tous ces quatre oxydes dopants de préférence dans les proportions citées plus haut.

Par exemple, cette céramique aura la composition massique suivante (en % en masse) :
- SnO₂ : 98,24% ;
- Co₃O₄ : 0,05%
- MnO₂ : 1,69% ;
- Nb₂O₅ : 0,01% ;
- Ta₂O₅ : 0,01%.

De manière générale, le SnO₂ permet d'utiliser un moins grand nombre de dopants, ces dopants étant utilisés dans des quantités globales plus faibles, et ces dopants étant en outre choisis parmi des dopants, moins polluants, moins toxiques et plus propres.

Par rapport aux céramiques à base de ZnO, la teneur relative en dopants par rapport à l'oxyde de métal de base ou oxyde de référence est généralement 10 fois moindre (10 fois moins de dopants) dans les céramiques à base de SnO₂.

Ainsi, le % de dopants est de l'ordre de 2%, notamment de 1,76%, dans l'exemple ci-dessus alors qu'il est généralement de l'ordre de 10% dans le cas des formulations au ZnO. De plus, des dopants toxiques tels que l'oxyde d'antimoine ne sont pas, de préférence, mis en oeuvre.

La poudre d'alliage de granulométrie déterminée peut être préparée en refroidissant de préférence rapidement, brutalement (trempe) le mélange ou alliage de métaux homogène liquide de façon à le solidifier, en conservant l'homogénéité chimique du mélange ou alliage de métaux liquides (haute température) puis en divisant l'alliage de métaux homogène solidifié en une poudre d'alliage de métaux de granulométrie déterminée.

Le refroidissement du mélange ou alliage de métaux liquide homogène de façon à le solidifier, le figer peut être réalisé en coulant le mélange ou alliage de métaux liquide dans une lingotière sous une atmosphère neutre ou réductrice, puis en refroidissant le lingot obtenu.

La division de l'alliage homogène solidifié peut être réalisée en phase liquide en le fondant de nouveau en un alliage de métaux homogène liquide qui est pulvérisé, atomisé par un courant de gaz ou de liquide et refroidi rapidement (trempé).

La poudre d'alliage de métaux de granulométrie déterminée peut aussi être préparée directement à partir de l'alliage de métaux liquide homogène issu de la deuxième étape du procédé, par pulvérisation, atomisation avec un courant de gaz ou de liquide et refroidissement rapide (« trempe »).

On constate que l'homogénéité de la poudre est améliorée par trempe du jet métallique dans un fluide réfrigérant.

Le courant de gaz peut être un courant de gaz neutre ou réducteur tel que l'hydrogène, l'azote, l'argon, ou leurs mélanges.

Le courant de gaz peut être un courant de gaz oxydant tel que l'air, l'air enrichi en oxygène, l'oxygène enrichi éventuellement en vapeur d'eau.

La division de l'alliage de métaux, homogène, solidifiée, peut aussi être réalisée en phase solide par abrasion, ou broyage.

La poudre d'alliage de métaux peut éventuellement être séparée en plusieurs coupes granulométriques.

La poudre d'alliage de métaux peut être oxydée totalement, c'est-à-dire que la poudre oxydée comprend 100% en poids d'oxyde.

Ou bien la poudre d'oxyde peut n'être oxydée que partiellement.

Dans ce cas, la poudre d'alliage de métaux peut être oxydée partiellement à un pourcentage de 50 à 99,90% en poids, de préférence de 55 à 80 ou 85% en poids, de préférence encore de 60 à 70% en poids, c'est-à-dire que la poudre oxydée comprend de 50 à 99,90% en poids d'oxydes, de préférence de 55 à 80 ou 85% en poids, de préférence encore de 60 à 70% en poids d'oxyde.

De préférence, la poudre d'alliage de métaux est oxydée partiellement à un pourcentage de 64% en poids.

L'oxydation totale ou partielle des particules de la poudre d'alliage de métaux de granulométrie déterminée peut être réalisée en mettant en contact lesdites particules avec un gaz oxydant à partir d'une température et/ou pendant une durée suffisante(s) pour obtenir un pourcentage voulu d'oxydes de métaux dans la poudre, par exemple pour que l'oxydation soit totale.

Par exemple, dans le cas de l'étain, un séjour de une minute à 900°C suffit à oxyder une monocouche de particules métalliques de 20 à 40 microns de diamètre moyen.

Ces conditions expérimentales de l'oxydation sont à préciser grâce à une analyse thermogravimétrique . Par exemple dans le cas de l'étain pur la température de 900°C pendant 15 minutes permet d'oxyder totalement l'étain en oxyde d'étain.

En d'autres termes, on observe un palier en température en maintenant les particules à cette température pendant une durée suffisante pour que l'oxydation soit totale.

Le taux d'oxydation des particules est, dans le cas de l'étain, contrôlé, conditionné essentiellement par la température du palier d'oxydation et non par sa durée comme dans le cas du zinc.

Il était totalement inattendu que dans le cas d'un mélange ou alliage à base d'étain la maîtrise de l'oxydation totale soit obtenue en contrôlant essentiellement la température du palier d'oxydation et non pas sa durée, comme c'est le cas pour le zinc et ses alliages.

Cela signifie qu'on peut donc obtenir par exemple une oxydation totale quelle que soit la durée du palier, à condition de se placer à la température adéquate.

Le gaz oxydant peut être choisi parmi les gaz contenant de l'oxygène enrichi éventuellement en vapeur d'eau et/ou en dioxyde de carbone tels que l'air, l'air enrichi en oxygène, l'oxygène, l'air enrichi en dioxyde de carbone et/ou en vapeur d'eau ; les mélanges de CO et de CO₂.

La mise en contact des particules avec le gaz oxydant peut être réalisée à une température supérieure ou égale à 400°C, par exemple de 400 à 950°C.

La durée de cette mise en contact est généralement de 6 heures à 1 seconde, de préférence de 4 heures à 2 secondes.

La mise en contact pourra donc être réalisée par exemple pendant 4 heures à 400°C, ou pendant 2 secondes à 900°C.

Dans le procédé selon l'invention, dans ce premier mode de réalisation, on vise à élaborer une poudre comprenant des oxydes (cas de d'oxydation partielle) ou constituée d'oxydes (cas de l'oxydation totale) finement divisée, homogène, avec des ségrégations les plus limitées possibles, isotrope, dont l'état de surface doit faciliter la densification ultérieure.

La poudre a une granulométrie qui est généralement submicronique en taille moyenne (par exemple diamètre moyen) des particules.

La mise en forme de la poudre homogène totalement ou partiellement oxydée peut être réalisée en la compactant sous forme de pastilles par exemple par pressage à froid.

Le frittage peut être réalisé à une température de 1100 à 1350°C pendant une durée généralement supérieure ou égale à 30 minutes, de préférence de 30 minutes à 2 heures.

Les buts ci-dessus et d'autres encore sont atteints, conformément à un second mode de réalisation du procédé de l'invention par un procédé de préparation d'une céramique semi-conductrice, comprenant, de préférence constituée par, un oxyde de métal de base et au moins un oxyde de métal dopant, dans lequel on réalise les étapes successives suivantes :
- on place dans un creuset, de l'étain ;
- on provoque la fusion de l'étain de façon à obtenir de l'étain liquide ;
- on prépare à partir de l'étain, liquide, une poudre d'étain de granulométrie déterminée, directement ou après une opération éventuelle de classification granulométrique (tamisage) ;
- on oxyde totalement ou partiellement la totalité de la poudre d'étain de granulométrie déterminée ou une coupe granulométrique déterminée de celle-ci ;
- on ajoute un ou plusieurs oxydes de métal dopant(s) à la poudre d'étain partiellement ou totalement oxydée ;
- on mélange la poudre d'étain partiellement ou totalement oxydée et du ou des oxyde(s) de métal dopant ;
- on met en forme le mélange de poudre d'étain partiellement ou totalement oxydé avec le ou les oxyde(s) de métal dopant ;
- on fritte la poudre mise en forme.

Le ou les oxydes de métal dopant(s) ajoutés à la poudre d'étain totalement ou partiellement oxydé(s) sont choisis parmi les oxydes de cobalt, de chrome, de manganèse, de niobium et de tantale, les oxydes de métal de transition tels que l'oxyde de zinc, et les oxydes de métaux de la famille des lanthanides tels que l'oxyde de lanthane.

De préférence, le ou les oxydes de métaux dopants sont choisis parmi les oxydes de cobalt, manganèse, niobium et tantale.

De préférence encore, la céramique contient en tant qu'oxydes de métal dopants, simultanément, à la fois, de l'oxyde de cobalt, de l'oxyde de manganèse, de l'oxyde de niobium et de l'oxyde de tantale.

Le ou les oxydes de métal dopant(s) sont ajoutés à la poudre d'étain partiellement ou totalement oxydée en un pourcentage massique tel qu'il permette d'obtenir une céramique comprenant une proportion d'oxyde d'étain supérieure ou égale à 90% en masse, de préférence supérieure ou égale à 95% en masse, de préférence encore supérieure ou égale à 99% en masse, mieux supérieure ou égale à 99,995% en masse.

En d'autres termes, le ou les oxydes de métal dopant peuvent donc être ajoutés à la poudre d'étain partiellement ou totalement oxydée en un pourcentage massique tel qu'il permette d'obtenir une céramique comprenant, en complément à 100% en masse d'oxyde d'étain, moins de 10% en masse, de préférence moins de 5% en masse, de préférence encore moins de 1% en masse et mieux moins de 0,005% en masse d'oxydes de métaux dopants.

Ce pourcentage de SnO₂ dans la céramique finale étant respecté, le ou les oxydes de métal dopant(s) sont ajoutés à la poudre d'étain partiellement ou totalement oxydée en un pourcentage massique tel qu'il permette d'obtenir une céramique comprenant en complément à 100% en masse d'oxyde d'étain un ou plusieurs parmi les oxydes suivants dans les proportions massiques suivantes :
- 0,1 à 3% d'oxyde de cobalt,
- 0,01 à 3% d'oxyde de chrome,
- 0,01 à 3% d'oxyde de manganèse,
- 0,01 à 0,5% d'oxyde de niobium,
- 0,01% à 0,5% d'oxyde de tantale,
- 0,01 à 0,5% d'un ou plusieurs oxydes de métal de transition,
- 0,01 à 0,5% d'un ou plusieurs oxydes de métal de la famille des lanthanides tel que l'oxyde de lanthane.

Des oxydes de dopants particulièrement préférés sont choisis parmi les oxydes de cobalt, de manganèse, de niobium et de tantale tels que le Co₃O₄, le MnO₂, le Nb₂O₅ et le Ta₂O₅, de préférence dans les proportions mentionnées ci-dessus.

Une céramique préférée comportera l'addition de tous ces quatre oxydes dopants de préférence dans les proportions citées plus haut.

Par exemple, cette céramique aura la composition massique suivante (en % en masse) :
- SnO₂ : 98,24% ;
- Co₃O₄ : 0,05%
- MnO₂ : 1,69% ;
- Nb₂O₅ : 0,01% ;
- Ta₂O₅ : 0,01%.

Tous les avantages et effets liés à l'utilisation de dopants spécifiques de préférence dans des proportions spécifiques mentionnés dans le cadre du premier mode de réalisation peuvent être intégralement répétés pour le second mode de réalisation de l'invention, et en particulier pour ce qui est des avantages et effets procurés par la mise en oeuvre des oxydes de cobalt, manganèse, niobium et tantale, de préférence dans des proportions spécifiques.

La poudre de métal, par exemple d'étain de granulométrie déterminée peut être préparée en phase liquide par fusion de l'étain massif en un métal liquide qui est pulvérisé, atomisé par un courant de gaz ou de liquide, et refroidi, trempé.

L'étain liquide peut être pulvérisé, atomisé, par un courant de gaz neutre ou réducteur tel que l'azote.

La poudre d'étain de granulométrie déterminée peut être préparée en phase solide par abrasion ou broyage.

La poudre d'étain peut être séparée en plusieurs coupes granulométriques.

La poudre d'étain peut être oxydée totament à un pourcentage de 100%.

Ou bien, la poudre d'étain peut n'être oxydée que partiellement.

Dans ce cas, la poudre d'étain peut être oxydée à un pourcentage de 50 à 99,90% en poids, de préférence de 55 à 80 ou 85% en poids, de préférence encore de 60 à 70% en poids, c'est-à-dire que la poudre oxydée comprend de 50 à 99,90% en poids d'oxyde, de préférence de 55 à 80 à 85% en poids d'oxyde, de préférence encore de 60 à 70% en poids d'oxyde, mieux encore la poudre est oxydée à un pourcentage de 64% en poids.

Par exemple, dans le cas de l'étain, un séjour de une minute suffit à oxyder une monocouche de particules métalliques de 20 à 40 microns de diamètre moyen à 900°C.

L'oxydation partielle ou totale de la poudre d'étain peut être réalisée en mettant en contact ladite poudre avec un gaz oxydant à partir d'une température et/ou pendant une durée suffisante(s) pour obtenir un pourcentage voulu d'oxyde d'étain dans la poudre.

Comme on l'a déjà mentionné plus haut pour le premier mode de réalisation du procédé de l'invention, le contrôle du taux d'oxydation est, dans le cas de l'étain, essentiellement contrôlé par la température du palier et non par sa durée comme dans le cas du zinc.

La mise en contact des particules avec le gaz oxydant peut être réalisée à une température supérieure ou égale à 400°C, par exemple de 400 à 950°C pendant une durée de 1 seconde à 6 heures, de préférence de 2 secondes à 4 heures.

Le gaz oxydant peut être choisi parmi les gaz contenant de l'oxygène enrichi éventuellement en vapeur d'eau et/ou en dioxyde de carbone tels que l'air, l'air enrichi en oxygène, l'oxygène, l'air enrichi en dioxyde de carbone et/ou en vapeur d'eau ; les mélanges de CO et de CO₂.

De manière analogue au premier mode de réalisation, le procédé selon l'invention, dans le second mode de réalisation, peut être défini comme un procédé de type « ODAP » appliqué à l'étain qui est mis en oeuvre pour préparer des céramiques à base d'oxyde d'étain dopé, les métaux dopants étant ajoutés sous forme d'oxydes dans la poudre soumise au frittage et non sous la forme de métaux ou de sels, dans le creuset au début du procédé.

L'ensemble des arguments mentionnés dans le cadre du premier mode de réalisation en relation avec l'application inattendue du procédé « ODAP » à l'étain peuvent être intégralement appliqués au second mode de réalisation du procédé de l'invention.

Les deux modes de réalisation du procédé selon l'invention sont liés par un même concept inventif qui est l'application surprenante du procédé ODAP à l'étain afin de préparer des céramiques pour varistances.

En outre, ce second mode de réalisation du procédé de l'invention comprend une suite spécifique d'étapes elles-mêmes spécifiques qui n'est ni décrite, ni suggérée dans l'art antérieur.

En premier lieu dans le procédé selon ce second mode de réalisation, on met en oeuvre spécifiquement de l'étain massif pur, et non un alliage d'étain comme dans l'art antérieur.

Puis on procède à une oxydation partielle ou totale de la poudre d'étain.

L'étape suivante du procédé qui consiste à ajouter un ou plusieurs oxydes dopants à la poudre d'étain partiellement ou totalement oxydée est également spécifique du procédé selon l'invention dans ce mode de réalisation.

Il est à noter que les remarques formulées plus haut pour le premier mode de réalisation et relatives à la mise en oeuvre d'une oxydation seulement partielle de la poudre d'alliage s'appliquent intégralement au deuxième mode de réalisation dans le cas où l'on réalise une oxydation partielle de la poudre d'étain (et non d'alliage comme dans le premier mode de réalisation). Notamment, la poudre soumise au frittage contient alors de l'étain métal, de l'oxyde d'étain et les oxydes de métaux dopants ajoutés.

En particulier, on obtient des améliorations similaires de la densification et des propriétés électriques.

L'invention sera mieux comprise à la lecture de la description détaillée qui va suivre donnée à titre illustratif et non limitatif, et faite en référence au dessin joint, dans lequel :

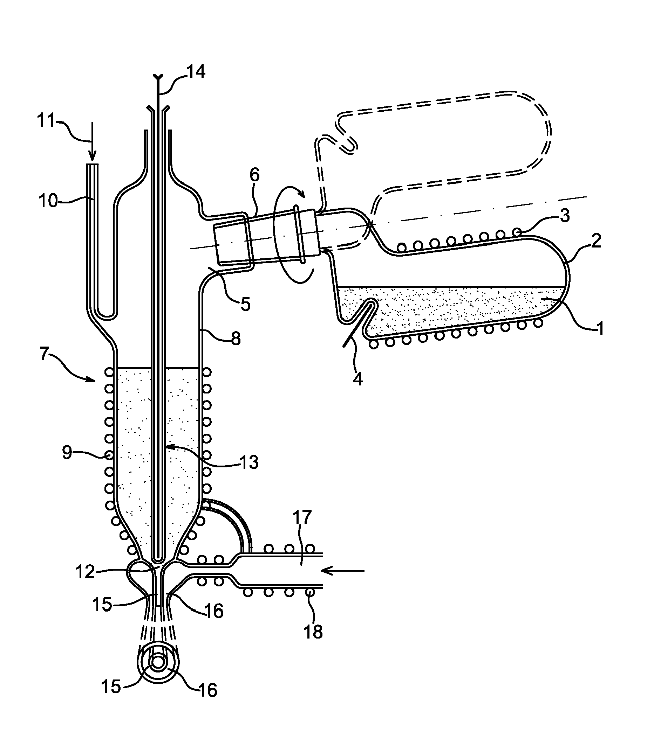

- la figure 1 est une vue en coupe verticale schématique d'un appareil d'atomisation pour préparer une poudre d'alliage de métaux de granulométrie déterminée dont chacune des particules est homogène.

Le premier mode de réalisation du procédé selon l'invention va maintenant être décrit de manière détaillée.

Ce procédé peut être défini comme étant un procédé "ODAP" adapté à un alliage particulier à base de Sn.

Dans la première étape du procédé selon l'invention, dans sa première forme de réalisation, on place dans un creuset ou tout autre récipient convenant à la fusion des métaux, de l'étain en tant que métal de base, c'est-à-dire en tant que métal dont l'oxyde est l'oxyde de base de la céramique à préparer et un ou plusieurs autres métaux dopants mentionnés plus haut et/ou un ou plusieurs sels de ces métaux dopants, de préférence dans les proportions définies plus haut.

Le terme « oxyde de métal de base » (cet oxyde de métal de base étant dans le cas présent, l'oxyde d'étain SnO₂) tel qu'utilisé dans la présente description est utilisé généralement pour indiquer que cet oxyde est majoritaire en masse dans la céramique finale, frittée, c'est-à-dire que cet oxyde représente généralement 50% en masse ou plus, de préférence plus de 50% en masse de la céramique finale, les proportions encore préférées de l'oxyde de métal de base (supérieures ou égales à 90, 95, 99, ou 99,995% en masse) ont été données plus haut.

Le terme « dopant » est un terme couramment utilisé par l'homme du métier dans ce domaine de la technique.

Le terme « sel » est tel que couramment utilisé en chimie minérale et inclue les chlorures, nitrates, etc..., mais aussi notamment les oxydes.

La céramique finale peut éventuellement comprendre, outre l'oxyde de métal de base et l'oxyde de métal dopant, notamment, des impuretés et/ou d'autres additifs. Par impuretés, on entend des substances se trouvant de manière fortuite, non voulue, dans la céramique, et par additifs, on entend des substances ajoutées de manière volontaire dans la céramique afin d'obtenir une ou des propriétés particulières. De préférence, la céramique semi-conductrice est constituée par un oxyde de métal de base et au moins un oxyde de métal dopant.

On provoque ensuite dans une deuxième étape la fusion de l'étain et desdits métaux dopants et/ou sels de métaux dopants sous atmosphère neutre ou réductrice, par exemple d'hydrogène, tout en assurant un brassage des métaux en fusion pour obtenir un mélange ou alliage de métaux (étain et métaux dopants) liquide, homogène.

Lors de cette étape de fusion le ou les sels éventuellement présents peuvent se décomposer s'il s'agit de nitrates par exemple. La pollution éventuelle causée par cette décomposition est très faible, du fait même de la très faible teneur en dopants.

Cette première et cette deuxième étapes sont des étapes classiques qui peuvent facilement être mises en oeuvre par l'homme du métier par exemple à l'aide de l'appareil (four) décrit dans le document FR-A-2 674 157 (Fig. 1) et dans le document EP-A1-0 580 912 à la description desquels on pourra se référer.

Dans la troisième étape du procédé dans sa première forme de réalisation, on prépare à partir dudit mélange ou alliage de métaux, liquide, homogène, une poudre d'alliage de métaux de granulométrie déterminée dont chacune des particules est homogène.

Ladite granulométrie déterminée peut être obtenue directement ou bien à l'issue d'une éventuelle opération de tamisage.

Cette poudre d'alliage de métaux peut être préparée directement par pulvérisation, atomisation, sans refroidissement préalable, de l'alliage liquide préparé dans la deuxième étape par un courant de gaz ou de liquide.

On pourra utiliser pour réaliser l'atomisation directe de l'alliage liquide l'appareil décrit dans la figure 3 du document EP-A1-0 580 912.

Ou bien, on peut, tout d'abord, refroidir le mélange ou alliage de métaux, liquide, homogène de façon à le solidifier puis diviser cet alliage de métaux homogène solidifié en une poudre d'alliage de métaux de granulométrie déterminée.

L'opération de refroidissement peut être effectuée en coulant l'alliage de métaux liquide dans une lingotière sous une atmosphère neutre ou réductrice puis en refroidissant le lingot obtenu de même sous atmosphère neutre ou réductrice.

Ou bien l'alliage, s'il a été réalisé dans une ampoule en silice scellée sous vide contenant les différents métaux, cette ampoule ayant été ensuite chauffée dans un four et agitée régulièrement pour obtenir un mélange liquide homogène, peut être enfin refroidi par une trempe destinée à figer l'alliage obtenu.

La division de l'alliage de métaux homogène solidifié tel qu'un lingot peut être réalisé en fondant de nouveau cet alliage solide (qui est par exemple sous la forme d'un lingot) pour donner un alliage de métaux homogène liquide qui est pulvérisé par un courant de gaz ou de liquide.

Le liquide utilisé pour l'atomisation peut être de l'eau.

Le gaz utilisé par l'atomisation pulvérisation peut être un gaz réducteur ou neutre choisi par exemple parmi l'hydrogène, l'azote, l'argon et leurs mélanges.

Le gaz utilisé pour l'atomisation, pulvérisation peut être un gaz oxydant tel que l'air, éventuellement enrichi en oxygène et/ou en vapeur d'eau, ou l'oxygène, de sorte que les fines particules d'alliage en fusion sont pulvérisées en fines particules qui sont en même temps partiellement oxydées et refroidies.

De préférence, dans ce mode de réalisation de l'invention on utilise un gaz réducteur ou neutre, de ce fait, de fines particules ou gouttelettes d'alliages sont alors refroidies et conservées à un état métallique non oxydé ou très superficiellement oxydé. Dans tous les cas et quel que soit le gaz utilisé pour la pulvérisation, dans ce mode de réalisation du procédé de l'invention, les particules d'alliage subissent obligatoirement ensuite une oxydation totale ou partielle préalablement à la mise en forme et au frittage.

Dans le cas où le gaz utilisé est un gaz oxydant, la pulvérisation est effectuée généralement à une température de 400 à 1000°C tandis que dans le cas où le gaz utilisé est un gaz neutre ou réducteur la pulvérisation est effectuée généralement à une température de 230 à 1000°C.

La division, atomisation, pulvérisation de l'alliage peut être réalisée avec un appareil tel que celui décrit dans les documents FR-A-2 674 157 (Fig. 2) et EP-A-0 580 912 (Fig. 2) à la description desquels on pourra se référer.

La division, atomisation, pulvérisation en phase liquide peut aussi être réalisée par atomisation du mélange, alliage, liquide par un jet de gaz par exemple avec de l'azote gazeux à l'aide de l'appareil décrit sur la figure 1.

Cet appareil comprend trois parties : une partie destinée à la fusion de l'alliage (ou du métal dans le cas du deuxième mode de réalisation de l'invention : voir plus bas) ; une enceinte qui est l'atomiseur proprement dit est qui est pourvu à sa base d'une buse d'atomisation ; et un tube ou tige pour obturer la buse d'atomisation et pour mesurer la température au niveau de cette buse.

L'ensemble de l'appareil est chauffé par l'intermédiaire de résistances électriques et soumis à un balayage de gaz neutre tel que l'argon (autre que le gaz d'atomisation) pour protéger le liquide de toute oxydation précoce pouvant favoriser une ségrégation des oxydes.

Plus précisément, l'alliage ou le métal (1) est fondu dans un récipient (2) chauffé par l'intermédiaire d'une résistance chauffante (3) et muni d'un thermocouple (4). Ce récipient est adapté dans un piquage (5) muni d'un raccord rodé (6) situé dans la paroi latérale (8) de l'atomiseur (7), ce dernier a la forme d'une enceinte cylindrique verticale sensiblement allongée.

Le raccord (6) permet de réaliser une rotation du récipient (2) contenant l'alliage (ou le métal) entre deux positions : une première position "basse" (en traits pleins) dans laquelle on procède au chauffage et à la fusion de l'alliage (ou du métal) et une seconde position "haute" (en traits pointillés) dans laquelle l'alliage (ou le métal) fondu, liquide peut être transvasé dans l'enceinte de l'atomiseur. L'alliage (ou le métal) fondu est maintenu en fusion à la partie inférieure de l'enceinte de l'atomiseur (7) par des résistances électriques chauffantes (9). Un tube (10) qui débouche dans la paroi latérale de l'enceinte de l'atomiseur envoie un courant de gaz inerte (11) tel que de l'argon dans l'enceinte et évite toute oxydation de l'alliage ou du métal fondu.

A la base de l'enceinte de l'atomiseur se trouve un orifice d'écoulement (12) pour l'alliage (ou le métal) liquide qui est obturé par une tige ou tube (13) muni en son centre d'un thermocouple (14). Lorsque l'on souhaite atomiser, pulvériser l'alliage (ou le métal) fondu, le tube ou tige (13) est soulevé et un filet d'alliage (ou de métal liquide) s'écoule par l'orifice dans une buse (15). Celle-ci est entourée par une cavité annulaire (16) recevant une alimentation latérale en courant de gaz d'atomisation tel que de l'azote par l'intermédiaire d'une canalisation (17) également équipée de résistances électriques chauffantes (18).

De ce fait, le filet, ou écoulement d'alliage (ou de métal) liquide qui s'échappe sous l'effet de la gravité de l'extrémité de la buse est pulvérisé, atomisé grâce à la dépression provoquée par la couronne de flux gazeux tel que l'azote qui entoure l'alliage en fusion s'écoulant par la buse (15).

Les gouttelettes d'alliage ou de métal liquide sont ensuite refroidies, de préférence refroidies rapidement, c'est-à-dire trempées, afin de récupérer une poudre d'alliage (ou de métal). La division de l'alliage de métaux (ou du métal) homogène solidifié tel qu'un lingot peut aussi être réalisé en phase solide par exemple par abrasion, broyage ou usinage. Cette pulvérisation, atomisation en phase solide s'effectue généralement à la température d'ébullition de l'azote sous 1 bar, à savoir -196°C.

A l'issue de l'atomisation, pulvérisation, la poudre peut déjà présenter la granulométrie voulue sinon on la soumet par exemple à une opération de tamisage.

En outre, la poudre d'alliage (ou de métal dans le deuxième mode de réalisation) peut ensuite être séparée en plusieurs coupes granulométriques par tamisage ou tout autre procédé de séparation.

La totalité de la poudre ou seulement une coupe granulométrique déterminée, par exemple la coupe granulométrique comprenant les particules d'un diamètre inférieur à 40 µm est soumise à l'étape suivante du procédé qui consiste en une oxydation totale ou partielle de la poudre d'alliage obtenue précédemment.

Par oxydation totale, on entend que la poudre finale obtenue contient 100% en masse d'oxydes.

Par oxydation partielle, on entend que la poudre finale comprend une proportion d'oxyde(s) inférieure à 100% en poids, de préférence la proportion d'oxyde(s) est de 50 à 99,9% en poids, de préférence elle est de 55 à 80% ou 85% en poids, elle est de préférence encore de 60 à 70% en poids.

Cette oxydation totale ou partielle est réalisée généralement en évitant la coalescence des particules : cela peut être obtenu en jouant sur les paramètres physiques liés à la technique utilisée : tels que la température, la pression, la vitesse, ... ou encore grâce à la technologie mise en oeuvre : par exemple on pourra utiliser un lit fluidisé, pulvérulent.

Cette oxydation totale ou partielle est généralement réalisée en mettant en contact la poudre d'alliage (ou de métal) avec un gaz oxydant à partir d'une température et/ou pendant une durée suffisante(s) pour que l'oxydation soit totale ou que l'on obtienne le pourcentage voulu d'oxyde(s) dans la poudre.

Par exemple, dans le cas de l'étain, un séjour de une minutre suffit à oxyder une monocouche de particules métalliques de 20 à 40 microns de diamètre moyen à 900°C.

Le gaz oxydant peut être tout gaz oxydant convenant à ce but mais il est généralement choisi parmi les gaz contenant de l'oxygène enrichi éventuellement en vapeur d'eau et/ou en dioxyde de carbone, tels que l'air, l'air enrichi en oxygène, l'oxygène, l'air enrichi en dioxyde de carbone et/ou en vapeur d'eau ; les mélanges de CO et de CO₂.

La mise en contact des particules d'alliage (ou de métal) avec le gaz oxydant peut être réalisée à une température allant de 60 à 1000°C mais elle est généralement réalisée à une haute température à savoir une température supérieure ou égale à 400°C, par exemple de 400 à 950°C.

Cette mise en contact est effectuée pendant une durée suffisante pour que l'oxydation soit totale ou que l'on obtienne le pourcentage voulu d'oxyde(s) dans la poudre. Cette durée peut être facilement déterminée par l'homme du métier, par exemple au moyen de courbes d'oxydation trouvées lors d'expériences préalables, qui donnent en fonction de la température, et de la durée la quantité exacte d'alliage oxydée.

La poudre d'oxyde(s) obtenue a une granulométrie qui est généralement submicronique en taille moyenne (par exemple diamètre moyen) des particules.

La poudre d'oxyde(s) obtenue est ensuite, de manière connue, mise en forme, par exemple compactée sous la forme de pastilles de céramiques, par pressage à froid, par exemple par pressage uniaxial à froid en utilisant un liant organique ou minéral tel que de l'eau.

La poudre mise en forme, compactée, par exemple sous la forme de pastilles, est ensuite de manière connue frittée à haute température généralement à une température de 1100 à 1350°C pendant une durée supérieure ou égale à 30 minutes, de préférence de 30 minutes à 2 heures, par exemple à 1350°C pendant une heure pour la densifier.

Les céramiques densifiées obtenues à l'issue du procédé selon cette première forme de réalisation peuvent être utilisées dans les varistances en procédant préalablement à leur métallisation.

Le deuxième mode de réalisation du procédé selon l'invention va maintenant être décrit de manière détaillée.

Ce procédé peut être défini notamment comme étant un procédé "ODAP", appliqué à un l'étain pur et non à un alliage d'étain et de dopants.

De ce fait, dans une première étape, on fournit de l'étain massif pur par exemple sous la forme de morceaux ou de grenaille ou de lingots.

Dans une deuxième étape, on prépare à partir de l'étain massif pur une poudre d'étain de granulométrie déterminée.

La poudre d'étain de granulométrie déterminée peut être préparée en phase liquide par fusion de l'étain massif pour donner un métal liquide qui est pulvérisé, atomisé par un courant de gaz neutre ou réducteur choisi par exemple parmi l'hydrogène, l'azote, l'argon et leurs mélanges ou bien par un courant de gaz oxydant.

Les conditions de cette atomisation, pulvérisation en phase liquide ont été décrites en détail plus haut en relation avec le premier mode de réalisation, en particulier on peut utiliser pour réaliser cette étape l'appareil décrit sur la figure 1.

La poudre d'étain de granulométrie déterminée peut être préparée en phase solide par abrasion ou broyage dans des conditions déjà décrites pour le premier mode de réalisation.

De même, on peut comme dans le premier mode de réalisation séparer la poudre d'étain en plusieurs coupes granulométriques.

La totalité ou seulement une coupe granulométrique déterminée, par exemple la coupe granulométrique comprenant les particules d'un diamètre inférieur à 40 µm est soumise à l'étape suivante du procédé qui consiste en une oxydation partielle ou totale de la poudre de métal obtenue précédemment.

Les définitions et les conditions des oxydations partielles et totales ont déjà été données plus haut dans la cadre du premier mode de réalisation.

Par oxydation partielle, au contraire de l'art antérieur où l'on effectue une oxydation totale, on entend que seulement une partie de ladite poudre de métal est oxydée et que l'on obtient une poudre comprenant par exemple à la fois du dioxyde d'étain et de l'étain métallique.

De préférence, la poudre d'étain est oxydée partiellement à un pourcentage de 50 à 99,9% en poids, de préférence de 55 à 80 ou 85% en poids, de préférence encore de 60 à 70% en poids, c'est-à-dire que la poudre oxydée comprend de 50 à 99,90% en poids, de préférence de 55 à 80 ou 85% en poids, de préférence encore de 60 à 70% en poids d'oxyde et le reste de métal libre, c'est-à-dire de Sn libre.

De préférence encore, la poudre d'étain est oxydée à un pourcentage de 64% en poids, c'est-à-dire qu'elle comprend par exemple en poids 64% de SnO₂ et 36% d'étain.

L'oxydation partielle ou totale de la poudre de métal par exemple de la poudre d'étain de granulométrie déterminée est réalisée en mettant en contact ladite poudre avec un gaz oxydant à une température et pendant une durée suffisantes pour obtenir un pourcentage voulu (par exemple dans les plages définies plus haut) d'oxyde d'étain, pouvant atteindre 100% d'oxyde d'étain dans la poudre oxydée partiellement ou totalement.

Le gaz utilisé et les conditions de températures sont analogues à celles décrites plus haut pour le premier mode de réalisation du procédé selon l'invention.

La mise en contact est effectuée pendant une durée suffisante pour obtenir le pourcentage voulu d'oxyde dans la poudre, cette durée peut être facilement déterminée par l'homme du métier par exemple au moyen de courbes d'oxydation comme cela a été décrit plus haut.

Dans l'étape suivante, on ajoute un ou plusieurs oxydes de métal dopant(s) en poudre à la poudre d'étain partiellement ou totalement oxydée.

Le ou les oxydes de métal dopants ajoutés à la poudre d'étain partiellement ou totalement oxydée peuvent être choisis parmi tous les oxydes de métal dopants adéquats.

Ils sont généralement choisis parmi les oxydes de cobalt, de chrome, de manganèse, de niobium, de tantale, les oxydes de métal de transition tels que l'oxyde de zinc, et les oxydes de métal de la famille des lanthanides tels que l'oxyde de lanthane. Les oxydes peuvent être des oxydes du commerce ou des oxydes préparés par tout procédé connu, voire par le procédé « ODAP ».

Le ou les oxydes de métal dopants sont ajoutés à la poudre d'étain totalement ou partiellement oxydée en un pourcentage massique tel qu'il permette d'obtenir une céramique comprenant, en complément à 100% en masse d'oxyde d'étain, le pourcentage voulu des oxydes de métal dopants.

Par exemple, le ou les oxydes dopants peuvent être ajoutés en un pourcentage massique tel qu'ils permettent d'obtenir une céramique comprenant en complément à 100% en masse d'oxyde de métal par exemple d'oxyde d'étain :
- 0,1 à 3% d'oxyde de cobalt, et/ou,
- 0,01 à 3% d'oxyde de chrome, et/ou,
- 0,01 à 3% d'oxyde de manganèse, et/ou,
- 0,01 à 0,5% d'oxyde de niobium, et/ou,
- 0,01% à 0,5% d'oxyde de tantale, et/ou,
- 0,01% à 0,5 % d'un ou plusieurs oxydes de métal de transition,
- 0,01 à 0,5% d'un ou plusieurs oxydes de métal de la famille des lanthanides tel que l'oxyde de lanthane.

Le mélange des poudres est effectué par des procédés connus. Les étapes de mise en forme et de frittage sont réalisées dans les mêmes conditions que pour le premier mode de réalisation avec éventuellement de légères adaptations.

L'invention va maintenant être décrite en référence aux exemples suivants, donnés à titre illustratif et non limitatif.

### Exemple 1

Cet exemple illustre le premier mode de réalisation du procédé selon l'invention dans lequel le procédé "ODAP" est adapté pour préparer de l'oxyde d'étain dopé par des oxydes de certains métaux dans des proportions spécifiques.

On prépare dans cet exemple une céramique ayant la composition massique suivante (en % en masse) :
- SnO₂ : 98,24% ;
- Co₃O₄ : 0,05%
- MnO₂ : 1,69% ;
- Nb₂O₅ : 0,01% ;
- Ta₂O₅ : 0,01%.

Le procédé "ODAP" est mis en oeuvre sur les cinq métaux initiaux : L'étain, puis le cobalt, le manganèse, le niobium et le tantale en tant que dopants.

Un alliage liquide est d'abord élaboré à partir de ces cinq métaux. Il est ensuite trempé afin de figer la composition de l'alliage obtenu.

L'alliage est ensuite disposé dans un atomiseur où il est pulvérisé par un courant d'azote gazeux pour donner une poudre d'alliage.

L'élaboration de l'alliage et son atomisation sont réalisés sur un prototype expérimental de laboratoire.

Ainsi, la préparation de l'alliage est-t-elle réalisée dans une ampoule en silice scellée sous vide, qui reçoit les divers métaux solides dans les proportions voulues. Cette ampoule est ensuite chauffée dans un four à 1100°C et agitée régulièrement pour obtenir un mélange liquide homogène.

L'alliage fondu est alors atomisé, ce qui effectue une trempe destinée à figer l'alliage obtenu de façon à en conserver l'homogénéité acquise à hautes températures.

L'atomisation ou division en poudre de l'alliage est réalisée dans un atomiseur, dispositif d'atomisation, tel que celui décrit sur la figure 1.

La coupe granulométrique des particules de diamètre inférieur à 40 µm est séparée de l'ensemble de la poudre pour la suite du procédé.

La poudre correspondant à cette coupe est ensuite oxydée totalement en poudre d'oxyde ; l'oxydation totale est réalisée en plaçant la poudre d'alliage dans un four sous atmosphère d'air et en la maintenant à une température de 900°C pendant une durée de 5 minutes.

Enfin, cette poudre résultante est mise en forme sous une pression de 3 Tonnes dans une matrice équipée de deux cylindriques mobiles, puis frittée à 1350°C pendant 2 heures avec une montée et une descente en température de 3°C/minute pour aboutir à une céramique massive.

Les caractéristiques électriques des céramiques obtenues après métallisation sont les suivantes : le coefficient de non-linéarité α est de 47 (mesuré autour de 10⁻³ A/cm²) et le champ de seuil Eₛ est de 450 V/mm (mesuré pour 10⁻³ A/cm²).

### Exemple 2

Cet exemple illustre le deuxième mode de réalisation du procédé selon l'invention dans lequel le procédé "ODAP" est modifié en réalisant une oxydation partielle (et non plus totale) d'une poudre d'étain (et non plus d'une poudre d'alliage) et dans lequel les oxydes dopants sont ajoutés à la poudre oxydée, dans ce cas partiellement oxydée, avant le frittage.

On prépare dans cet exemple une céramique ayant une composition massique voisine de celle de l'exemple 1 :
- SnO₂ : 98,3% ;
- CO₃ : 0,05% ;
- MnO₂ : 1,69% ;
- Nb₂O₅ : 0,01% ;
- Ta₂O₅ : 0,03%.

Le procédé "ODAP" est mis en oeuvre sur un produit initial qui est de l'étain massif pur. Celui-ci est d'abord atomisé sous azote afin d'obtenir une poudre métallique d'étain. Les paramètres principaux relatifs au gaz atomisant sont une pression de 3 bars, un débit de 45 L/minute, et une température de 700°C. On met en oeuvre le dispositif d'atomisation décrit sur la figure 1.

La poudre est tamisée de façon à ne retenir que la coupe granulométrique de moins de 40 µm. Cette poudre est ensuite oxydée partiellement à 64% en poids, c'est-à-dire qu'elle contient en masse 64% de dioxyde d'étain SnO₂ et 36% d'étain.

Cette oxydation partielle est réalisée en plaçant la poudre d'étain dans un four sous atmosphère d'air, en réalisant une montée en température à raison de 3°C/minute jusqu'à 750°C et en observant un palier d'une durée limitée à 5 minutes à cette température avant trempe à l'air.

Les oxydes dopants oxydes (Co₃O₄, Nb₂O₅ et Ta₂O₅) sous la forme de poudre sont alors ajoutés en quantités voulues à la poudre métal-céramique.

Cet ensemble est ensuite mélangé, puis mis en forme et fritté dans les mêmes conditions que l'exemple 1, pour donner une céramique.

La présence d'étain métallique au sein de la céramique crue, c'est-à-dire avant frittage, a permis d'augmenter la densification de la céramique après frittage de 75,2 à 85,4%.

Les caractéristiques électriques des céramiques obtenues après métallisation sont les suivantes : le coefficient de non-linéarité α est de 53 (mesuré autour de 10⁻³ A/cm²), et le champ de seuil Eₛ est de 308 V/mm (mesuré pour 10⁻³ A/cm²)

## Revendications

1. Procédé de préparation d'une céramique semi-conductrice comprenant, de préférence constituée par, un oxyde de métal de base et au moins un oxyde de métal dopant, dans lequel on réalise les étapes successives suivantes :
- on place dans un creuset, de l'étain métal (Sn) et ; un ou plusieurs autres métaux dopants et/ou un ou plusieurs sels de ces autres métaux dopants ;
- on provoque la fusion de l'étain et desdits métaux dopants et/ou sels de métaux dopants placés dans le creuset sous atmosphère neutre ou réductrice, tout en assurant un brassage de l'étain et des métaux dopants et/ou sels de métaux dopants en fusion pour obtenir un mélange ou alliage de métaux liquide, homogène ;
- on prépare à partir dudit mélange ou alliage de métaux, liquide, homogène, une poudre d'alliage de métaux de granulométrie déterminée, directement ou après une opération éventuelle de classification granulométrique, dont chacune des particules est homogène ;
- on oxyde totalement ou partiellement la totalité desdites particules de la poudre d'alliage de métaux de granulométrie déterminée ou une coupe granulométrique déterminée de celle-ci pour obtenir une poudre homogène, totalement ou partiellement oxydée, en évitant la coalescence des particules ;
- on met en forme la poudre homogène totalement ou partiellement oxydée ;
- on fritte la poudre mise en forme.

2. Procédé selon la revendication 1, dans lequel le ou les oxydes de métaux dopants sont choisis parmi les oxydes de cobalt, chrome, manganèse, niobium, tantale, métaux de transition tels que le zinc, et métaux de la famille des lanthanides.

3. Procédé selon l'une quelconque des revendications 1 et 2, dans lequel le ou les oxydes de métaux dopants sont choisis parmi les oxydes de cobalt, manganèse, niobium, et tantale.

4. Procédé selon la revendication 3, dans lequel la céramique contient en tant qu'oxydes de métal dopants, de l'oxyde de cobalt, de l'oxyde de manganèse, de l'oxyde de niobium et de l'oxyde de tantale.

5. Procédé selon l'une quelconque des revendications précédentes, dans lequel la proportion massique de l'étain et du ou des autres métaux dopants et/ou sels de métaux dopants placés dans le creuset, est telle qu'elle permette d'obtenir une céramique comprenant une proportion d'oxyde d'étain supérieure ou égale à 90% en masse, de préférence supérieure ou égale à 95% en masse, de préférence encore supérieure ou égale à 99% en masse, mieux supérieure ou égale à 99,995% en masse.

6. Procédé selon la revendication 5, dans lequel la proportion massique du ou des autres métaux dopants et/ou sels de métaux dopants dans le creuset est telle qu'elle permette d'obtenir une céramique comprenant en complément à 100% en masse d'oxyde d'étain un ou plusieurs parmi les oxydes suivants dans les proportions en masse suivantes :
• 0,1 à 3% d'oxyde de cobalt,
• 0,01 à 3% d'oxyde de chrome,
• 0,01 à 3% d'oxyde de manganèse,
• 0,01 à 0,5% d'oxyde de niobium,
• 0,01% à 0,5% d'oxyde de tantale,
• 0,01 à 0,5% d'un ou plusieurs oxydes de métal de transition,
• 0,01 à 0,5% d'un ou plusieurs oxydes de métal de la famille des lanthanides tel que l'oxyde de lanthane.

7. Procédé selon la revendication 6, dans lequel la proportion massique du ou desdits métaux dopants et/ou sels de métaux dopants dans le creuset est telle qu'elle permette d'obtenir une céramique comprenant en complément à 100% en masse d'oxyde d'étain les oxydes suivants dans les proportions en masse suivantes :
- SnO₂ : 98,24% ;
- Co₃O₄ : 0,05%;
- MnO₂ : 1,69% ;
- Nb₂O₅ : 0,01% ;
- Ta₂O₅ : 0,01%.

8. Procédé selon l'une quelconque des revendications précédentes, dans lequel la poudre d'alliage est préparée en refroidissant, de préférence rapidement, le mélange ou alliage de métaux liquide de façon à le solidifier tout en conservant l'homogénéité chimique du mélange ou alliage de métaux liquides haute température, puis en divisant l'alliage de métaux homogène solidifié en une poudre d'alliage de métaux de granulométrie déterminée.

9. Procédé selon la revendication 8, dans lequel le mélange ou alliage de métaux liquide est coulé dans une lingotière sous une atmosphère neutre ou réductrice puis le lingot obtenu est refroidi.

10. Procédé selon l'une quelconque des revendications 8 et 9, dans lequel la division de l'alliage de métaux homogène solidifié est réalisée en phase liquide en le fondant de nouveau en un alliage de métaux homogène liquide qui est pulvérisé, atomisé par un courant de gaz ou de liquide, et trempé.

11. Procédé selon la revendication 1, dans lequel la poudre d'alliage de métaux de granulométrie déterminée est préparée directement à partir de l'alliage de métaux liquide, homogène par pulvérisation, atomisation, par un courant de gaz ou de liquide, et trempe.

12. Procédé selon la revendication 10 ou 11, dans lequel l'alliage de métaux homogène, liquide, est pulvérisé, atomisé par un courant de gaz neutre ou réducteur tel que l'hydrogène, l'azote, l'argon, ou leurs mélanges.

13. Procédé selon la revendication 10 ou 11 dans lequel l'alliage de métaux homogène, liquide est pulvérisé, atomisé par un courant de gaz oxydant tel que l'air, l'air enrichi en oxygène, ou l'oxygène enrichi éventuellement en vapeur d'eau.

14. Procédé selon l'une quelconque des revendications 8 et 9, dans lequel la division de l'alliage de métaux homogène, solidifié, est réalisée en phase solide par abrasion, ou broyage.

15. Procédé selon l'une quelconque des revendications précédentes, dans lequel la poudre d'alliage de métaux est séparée en plusieurs coupes granulométriques.

16. Procédé selon l'une quelconque des revendications précédentes, dans lequel la poudre d'alliage de métaux est oxydée partiellement à un pourcentage de 50 à 99,9% en poids, de préférence de 55 à 80% ou 85% en poids, de préférence encore de 60 à 70% en poids, c'est-à-dire que la poudre oxydée comprend de 50 à 99,9% en poids d'oxyde, de préférence de 55 à 80 ou 85% en poids, de préférence encore de 60 à 70% en poids d'oxyde.

17. Procédé selon la revendication 16, dans lequel la poudre d'alliage de métaux est oxydée à un pourcentage de 64% en poids.

18. Procédé selon l'une quelconque des revendications précédentes, dans lequel l'oxydation partielle ou totale des particules de poudre d'alliage de métaux de granulométrie déterminée est réalisée en mettant en contact lesdites particules avec un gaz oxydant à partir d'une température et/ou pendant une durée suffisante(s) pour obtenir un pourcentage voulu d'oxydes de métaux dans la poudre par exemple pour que l'oxydation soit totale.

19. Procédé selon la revendication 18, dans lequel le gaz oxydant est choisi parmi les gaz contenant de l'oxygène enrichi éventuellement en vapeur d'eau et/ou en dioxyde de carbone, tels que l'air, l'air enrichi en oxygène, l'oxygène, l'air enrichi en dioxyde de carbone et/ou en vapeur d'eau ; les mélanges de CO et de CO₂.

20. Procédé selon l'une quelconque des revendications 18 et 19, dans lequel la mise en contact des particules avec le gaz oxydant est réalisée à une température supérieure ou égale à 400°C, par exemple de 400 à 950°C, pendant une durée de 1 seconde à 6 heures, de préférence de 2 secondes à 4 heures.

21. Procédé selon l'une quelconque des revendications précédentes, dans lequel la mise en forme de la poudre homogène totalement ou partiellement oxydée est réalisée en la compactant sous forme de pastilles par exemple par pressage à froid.

22. Procédé selon l'une quelconque des revendications précédentes, dans lequel le frittage est réalisé à une température de 1100 à 1350°C pendant une durée supérieure ou égale à 30 minutes, de préférence de 30 minutes à 2 heures.

23. Procédé de préparation d'une céramique semi-conductrice comprenant, de préférence constituée par, un oxyde d'un métal de base et au moins un oxyde de métal dopant, dans lequel on réalise les étapes successives suivantes :
- on place dans un creuset, de l'étain ;
- on provoque la fusion de l'étain de façon à obtenir de l'étain liquide ;
- on prépare à partir de l'étain, liquide, une poudre d'étain de granulométrie déterminée, directement ou après une opération éventuelle de classification granulométrique ;
- on oxyde totalement ou partiellement la totalité de la poudre d'étain de granulométrie déterminée ou une coupe granulométrique déterminée de celle-ci ;
- on ajoute un ou plusieurs oxydes de métal dopant (s) à la poudre d'étain partiellement ou totalement oxydée ;
- on mélange la poudre d'étain partiellement ou totalement oxydée avec le ou les oxyde(s) de métal dopant ;
- on met en forme le mélange de poudre d'étain partiellement ou totalement oxydée et du ou des oxyde(s) de métal dopants ;
- on fritte la poudre mise en forme.

24. Procédé selon la revendication 23, dans lequel le ou les oxydes de métal dopant(s) ajoutés à la poudre d'étain totalement ou partiellement oxydée sont choisis parmi les oxydes de cobalt, de chrome, de manganèse, de niobium et de tantale, les oxydes de métaux de transition tels que le zinc, et les oxydes de métaux de la famille des lanthanides tels que l'oxyde de lanthane.

25. Procédé selon l'une quelconque des revendications 23 et 24, dans lequel le ou les oxydes de métaux dopants sont choisis parmi les oxydes de cobalt, manganèse, niobium et tantale.

26. Procédé selon la revendication 25, dans lequel la céramique contient en tant qu'oxydes de métal dopants, de l'oxyde de cobalt, de l'oxyde de manganèse, de l'oxyde de niobium et de l'oxyde de tantale.

27. Procédé selon l'une quelconque des revendications 23 à 26, dans lequel le ou les oxydes de métal dopant(s) sont ajoutés à la poudre d'étain partiellement ou totalement oxydée en un pourcentage massique tel qu'il permette d'obtenir une céramique comprenant une proportion d'oxyde d'étain supérieure ou égale à 90% en masse, de préférence supérieure ou égale à 95% en masse, de préférence encore supérieure ou égale à 99% en masse, mieux supérieure ou égale à 99,995% en masse.

28. Procédé selon la revendication 27, dans lequel le ou les oxydes de métal dopant(s) sont ajoutés à la poudre d'étain totalement ou partiellement oxydée en un pourcentage massique tel qu'il permette d'obtenir une céramique comprenant en complément à 100% en masse d'oxyde d'étain, un ou plusieurs parmi les oxydes suivants, dans les proportions en masse suivantes :
• 0,1 à 3% d'oxyde de cobalt,
• 0,01 à 3% d'oxyde de chrome,
• 0,01 à 3% d'oxyde de manganèse,
• 0,01 à 0,5% d'oxyde de niobium,
• 0,01% à 0,5% d'oxyde de tantale,
• 0,01 à 0,5% d'un ou plusieurs oxydes de métal de transition,
• 0,01 à 0,5% d'un ou plusieurs oxydes de métal de la famille des lanthanides tel que l'oxyde de lanthane.

29. Procédé selon la revendication 28, **caractérisé** dans lequel le ou les oxydes de métal dopants(s) sont ajoutés à la poudre d'étain partiellement ou totalement oxydée en un pourcentage massique tel qu'il permette d'obtenir une céramique comprenant un complément à 100% en masse d'oxyde d'étain les oxydes suivants dans les proportions en masse suivante :
- SnO₂ : 98,24% ;
- Co₃O₄ : 0,05% ;
- MnO₂ : 1,69% ;
- Nb₂O₅ : 0,01% ;
- Ta₂O₅ : 0,01%.

30. Procédé selon la revendication 23, dans lequel la poudre d'étain de granulométrie déterminée est préparée en phase liquide par fusion de l'étain massif en un métal liquide qui est pulvérisé, atomisé par un courant de gaz ou de liquide, et refroidi, trempé.

31. Procédé selon la revendication 23, dans lequel le métal liquide est pulvérisé, atomisé, par un courant de gaz neutre ou réducteur tel que l'azote.

32. Procédé selon la revendication 23, dans lequel la poudre d'étain de granulométrie déterminée est préparée en phase solide, par abrasion ou broyage.

33. Procédé selon l'une quelconque des revendications 23 à 32, dans lequel la poudre d'étain est oxydée partiellement à un pourcentage de 50 à 99,9% en poids, de préférence de 55 à 80 ou 85% en poids, de préférence encore de 60 à 70% en poids, c'est-à-dire que la poudre oxydée comprend de 50 à 99, 90% en poids d'oxyde, de préférence de 55 à 80 ou 85% en poids, de préférence encore de 60 à 70% en poids d'oxyde.

34. Procédé selon la revendication 33, dans lequel la poudre d'étain est oxydée à un pourcentage de 64% en poids.

35. Procédé selon l'une quelconque des revendications 23 à 34, dans lequel la poudre d'étain est séparée en plusieurs coupes granulométriques.

36. Procédé selon l'une quelconque des revendications 23 à 35, dans lequel l'oxydation partielle ou totale de la poudre d'étain de granulométrie déterminée est réalisée en mettant en contact ladite poudre avec un gaz oxydant à partir d'une température et/ou pendant une durée suffisante(s) pour obtenir un pourcentage voulu d'oxyde d'étain dans la poudre.

37. Procédé selon la revendication 36, dans lequel la mise en contact des particules avec le gaz oxydant est réalisée à une température supérieure ou égale à 400°C, par exemple de 400 à 950°C, pendant une durée de 1 seconde à 6 heures, de préférence de 2 secondes à 4 heures.

38. Procédé selon la revendication 36, ou 37, dans lequel le gaz oxydant est choisi parmi les gaz contenant de l'oxygène enrichi éventuellement en vapeur d'eau et/ou en dioxyde de carbone, tels que l'air, l'air enrichi en oxygène, l'oxygène, l'air enrichi en dioxyde de carbone et/ou en vapeur d'eau ; les mélanges de CO et de CO₂.

39. Procédé selon l'une quelconque des revendications 23 à 38, dans lequel la mise en forme du mélange de la poudre d'étain partiellement ou totalement oxydée et du ou des oxydes de métal dopant(s) est réalisée en la compactant sous forme de pastille par exemple par pressage à froid.

40. Procédé selon l'une quelconque des revendications 23 à 39, dans lequel le frittage est réalisé à une température de 1100°C à 1350°C pendant une durée supérieure ou égale à 30 minutes, de préférence de 30 minutes à 2 heures.
